# EUROPÄISCHE PATENTANMELDUNG

(11) **EP 3 202 511 A1**
(43) Veröffentlichungstag der Anmeldung: **09.08.2017**
(21) Anmeldenummer: 16154114.9
(22) Anmeldetag: 03.02.2016
(51) Int. Cl.: B22D 17/22, B29C 45/26

(54) **EINSATZELEMENT UND VERFAHREN ZUR HERSTELLUNG EINES GEWINDELOCHES**

(71) Anmelder: Siemens Aktiengesellschaft, 80333 München (DE)
(72) Erfinder: Görlich, Stefan, 92278 Illschwang (DE); Schmelz, Jürgen, 90610 Winkelhaid (DE)

(57) **Zusammenfassung**

Die Erfindung betrifft ein Einsatzelement (1) zum Erzeugen eines Gewindelochs (2) in einem Werkstück (3), welches nach dem Spritz- oder Druckgussverfahren hergestellt wird, aufweisend einen ein Gewindeprofil (4) tragenden Schaft (5) mit einem ersten Ende (6) und einem zweitem Ende (7), wobei das Gewindeprofil (4) vom ersten Ende (6) zum zweiten Ende (7) hin als konische Spirale ausgebildet ist, wodurch sich eine Entformungsschräge (8) ausbildet.

## Beschreibung

Die Erfindung betrifft ein Einsatzelement zum Erzeugen eines Gewindelochs in einem Werkstück, welches nach dem Spritzguss-oder Druckgussverfahren hergestellt wird.

Des Weiteren betrifft die Erfindung ein Verfahren zur Herstellung eines Werkstückes nach dem Spritzguss- oder Druckgussverfahren, wobei zum Erzeugen eines Gewindelochs in dem Werkstück ein mit einem Gewindeprofil versehenes Einsatzelement in einem Formenwerkzeug positioniert wird.

Bei Bauteilen oder Werkstücken, die im Spritz- oder Druckgussverfahren hergestellt wurden, werden oft Innengewinde zum Befestigen von weiteren Bauteilen, Schrauben oder Rundsteckverbindern benötigt. Bei der Herstellung von Kunststoffteilen wird für eine Entformung eines Gewindes ein Gewindekern umspritzt und nach dem Erstarren des Kunststoffes automatisch entspindelt. Bei einem Metallgussdruckverfahren ist dies, durch die größere Anhangkraft des Metalls auf dem umspritzten Gewindekern nicht möglich. Ein Losdrehmoment und auch ein weiteres Ausdrehmoment des Gewindekerns wären zu groß. Zusätzlich besteht die Gefahr, dass während des Ausdrehvorgangs des Gewindekerns aus der erstarrten Metallschmelze sich der Gewindekern in dem Werkstück festfrisst.

Um nach bisherigem Kenntnisstand Gewinde in beispielsweise Druckgussschalen einzubringen, wurden diese Gewinde durch Gewindeschneiden oder Fräsen nachträglich in die Gehäuseteile eingebracht. Diese ist, nach dem eigentlichen Herstellungsverfahren, nämlich dem Druckgussverfahren, ein zusätzlicher kostenintensiver Fertigungsschritt. Zusätzlich entstehen hierbei Grate und Späne die nachträglich wieder entfernt werden müssen. Dies erfordert einen weiteren zusätzlichen Fertigungsschritt.

Es ist Aufgabe der vorliegenden Erfindung das Herstellungsverfahren für Zink- oder Aludruckguss-Gehäuse kostengünstig zu gestalten und die Fertigungsschritte zu minimieren.

Die Aufgabe wird durch ein Einsatzelement zum Erzeugen eines Gewindelochs in einem Werkstück, welches nach dem Spritzguss-oder Druckgussverfahren hergestellt wird, gelöst. Dabei weist das Einsatzelement einen ein Gewindeprofil tragenden Schaft mit einem ersten Ende und einem zweiten Ende auf, wobei das Gewindeprofil vom ersten Ende zum zweiten Ende hin als konische Spirale ausgebildet ist, wodurch sich eine Entformungsschräge ausbildet. Mit dem erfindungsgemäßen Einsatzelement ist nun möglich, Gewinde bereits beim Gießvorgang eines Gehäuses durch späteres Ausspindeln des Einsatzelementes herzustellen. Um die Losdreh- und Ausdrehmomente des Einsatzelementes zu minimieren, weist das Einsatzelement eine Entformungsschräge auf, welche durch eine leichte Kegelspirale ausgebildetes Gewindeprofil entsteht. Nach dem ersten Losdrehen des Einsatzelementes hat dieses keinen Kontakt mehr zur erstarrten Metallschmelze und das Einsatzelement kann leichter entspindelt bzw. komplett ausgedreht werden. Bei einer herkömmlich genutzten zylindrischen Gewindespirale wäre das Losdrehmoment und auch das weitere Ausdrehmoment des Gewindekerns zu groß. Während des Ausdrehvorgangs des Gewindekerns aus der erstarrten Teilschmelze besteht bei zylindrischen Gewindekernen dann zusätzlich die Gefahr des Festfressens.

Eine weitere optimierte Ausgestaltung des Einsatzelementes sieht vor, dass das Gewindeprofil mehrere Gewindegänge aufweist und jeweils ein Gewindegang von Gewindeflanken umgeben ist, dabei sind die Gewindeflanken derart ausgebildet, dass ein erster Flankenwinkel eines ersten Gewindeganges, welcher zum zweiten Ende des Schafts angeordnet ist, kleiner ist als ein weiterer Flankenwinkel eines weiteren Gewindeganges, welche näher zum zweiten Ende des Schafts angeordnet ist. Wird der Flankenwinkel des herzustellenden Gewindes mittels des Einsatzelementes über die Länge der Gewindespirale leicht variiert, kann das Losdrehmoment und das Ausdrehmoment weiter minimiert werden. Ein metrisches ISO Gewinde hat einen Flankenwinkel von 60°. Wenn dieser über die gesamte Gewindespirale von 60° auf 70° aufgeweitet wird, entsteht eine zusätzliche Entformungsschräge die auch das Losdrehmoment weiter minimiert.

Weiterhin ist es vorteilhaft, wenn bei dem Einsatzelement ausgehend von der ersten Gewindeflanke der Flankenwinkel des jeweiligen nächsten Gewindeganges bis hin zu einem letzten am ersten Ende angeordneten Gewindeganges kontinuierlich zunimmt.

Vorteilhafterweise beträgt der erste Flankenwinkel des ersten Gewindeganges 60°.

Bei einem Verfahren zur Herstellung des Werkstückes nach dem Spritz- oder Druckgussverfahren, wobei zum Erzeugen eines Gewindelochs in dem Werkstück ein mit einem Gewindeprofil versehenes Einsatzelement in einem Formenwerkzeug positioniert wird, wird die eingangs genannte Aufgabe dadurch gelöst, dass als Einsatzelement, ein Einsatzelement verwendet wird, welches einen ein Gewindeprofil tragenden Schaft mit einem ersten Ende und einem zweiten Ende aufweist, wobei das Gewindeprofil vom ersten Ende zum zweiten Ende hin als konische Spirale ausgebildet ist, wodurch eine Entformungsschräge im Werkstück ausgebildet wird.

Um bei dem Herstellungsverfahren für ein Gewindeloch ein anschließendes Ausspindeln bzw. Ausdrehen zu erleichtern und damit ein Losdrehmoment bzw. ein Ausschraubmoment des Einsatzelementes weiter zu reduzieren, weist das Gewindeprofil mehrere Gewindegänge auf und jeweils ein Gewindegang ist von Gewindeflanken umgeben, dabei sind die Gewindeflanken derart ausgebildet, dass ein erster Flankenwinkel eines ersten Gewindeganges, welcher zum zweiten Ende des Schafts angeordnet ist, kleiner ist als ein weiterer Flankenwinkel eines weiteren Gewindeganges, welcher näher zum ersten Ende des Schafts angeordnet ist, wobei ein Werkstoff in das Formenwerkzeug gebracht wird und nach einem Erstarren des Werkstoffes in den Formenwerkzeug, wird auf das Einsatzelement ein Losdrehmoment ausgeübt, wobei nach dem ersten Losdrehen das Einsatzelement keinen Kontakt mehr zu dem erstarrten Werkstoff hat, wodurch ein Ausschraubmoment zum kompletten Entspindeln des Einsatzelementes minimiert wird.

Insbesondere zur Herstellung einer Gehäuseschale für ein industrielles Automatisierungsgerät wird das Verfahren mit Vorteil angewendet, hierbei wird in dem Formenwerkzeug der Gehäuseschale eine Vielzahl von Einsatzelementen für eine Vielzahl von Gewindelöchern für die spätere Montage von Gewindesteckverbindern positioniert.

Die Zeichnung beschreibt ein Ausführungsbeispiel der Erfindung. Es zeigt:
- FIG 1: eine perspektivische Ansicht eines Einsatzelementes und eines Werkstückes mit Gewindeloch,
- FIG 2: eine Schnittdarstellung der FIG 1 und
- FIG 3: eine vergrößerte Darstellung des auf das Einsatzelement aufgebrachten Gewindeprofils.

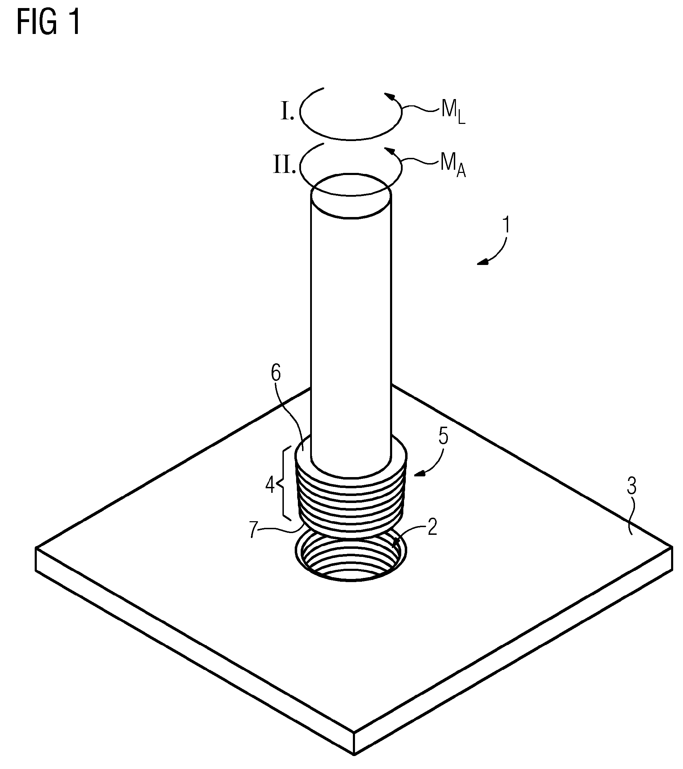

Gemäß der FIG 1 ist ein Einsatzelement 1 zum Erzeugen eines Gewindeloches 2 in einem Werkstück 3 dargestellt. Das Werkstück 3 wird nach dem Spritz- oder Druckgussverfahren hergestellt. Das Einsatzelement 1 weist ein Gewindeprofil 4 auf. Das Gewindeprofil 4 ist auf einen Schaft 5 des Einsatzelementes 1 aufgebracht. Der Schaft 5 weist ein erstes Ende 6 und ein zweites Ende 7 auf. Das erste Ende 6 ist an einem weiteren Haltestift des Einsatzelementes 1 angeordnet und das zweite Ende 7 ist entgegengesetzt davon angeordnet.

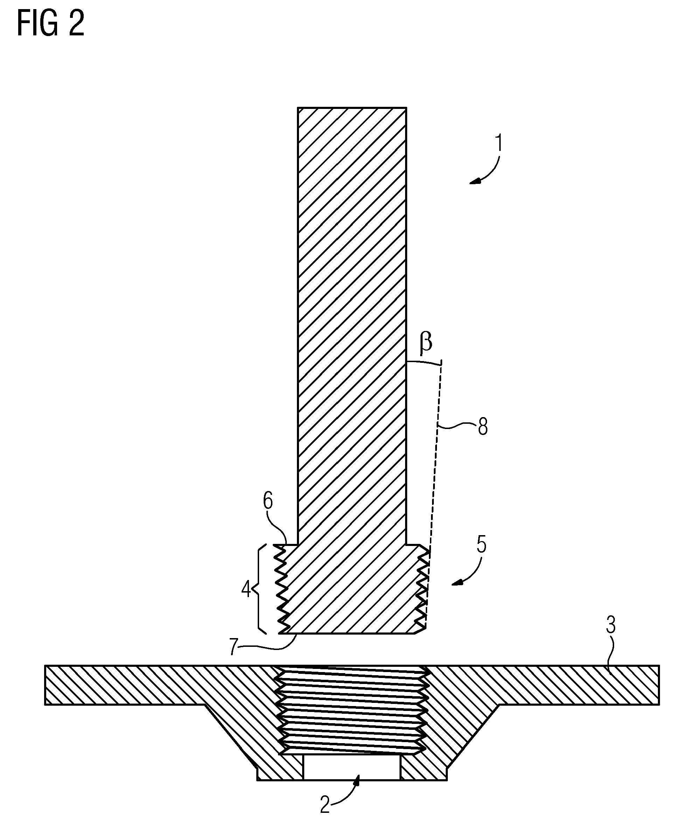

Das Gewindeprofil 4 ist vom ersten Ende 6 zum zweiten Ende 7 hin als konische Spirale ausgebildet, wodurch eine Entformungsschräge 8 (siehe FIG 2) ausgebildet ist.

Will man nach einem Spritzgussverfahren das Einsatzelement 1 aus der erkalteten Metallschmelze herausdrehen, so muss in einem ersten Schritt I auf das Einsatzelement 1 ein Losdrehmoment M_{L} angewendet werden und in einem zweiten Schritt II muss auf das Einsatzelement 1 weiterhin ein Ausschraubmoment M_{A} angewendet werden.

Durch die besondere Ausgestaltung des kegelförmigen oder konischen Gewindeprofils 4 werden sowohl das Losdrehmoment _{ML} als auch das Ausschraubmoment M_{A} reduziert.

Mit der FIG 2 ist das Einsatzelement 1 und das Werkstück 3 aus der FIG 1 in einer Schnittdarstellung dargestellt. Der Schaft 5 ist an dem Haltestift des Einsatzelementes 1 angeordnet und es zeichnet sich durch die Ausgestaltung des Gewindeprofils 4 als eine konische Spirale eine Entformungsschräge 8 ab. Die Entformungsschräge 8 steht in einem Winkel β zu einer Symmetrielinie des Einsatzelementes 1.

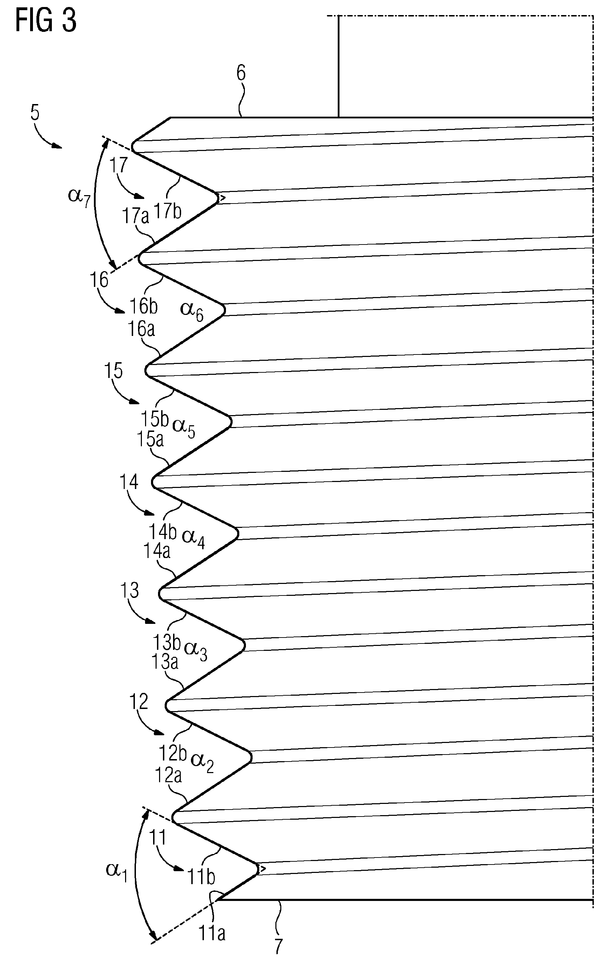

Mit der FIG 3 wird gezeigt, dass durch eine besondere Ausgestaltung des Gewindeprofils 4, nämlich das der Flankenwinkel des Gewindes über die Länge der Gewindespirale leicht variiert wird, das Losdrehmoment M_{L} und das Ausschraubmoment M_{A} weiter reduziert werden kann. Der Schaft 5 mit seinem Gewindeprofil 4 weist mehrere Gewindegänge 11,..,17 auf. Ein erster Gewindegang 11 ist von einer unteren Gewindeflanke 11a und einer oberen Gewindeflanke 11b umgeben, dabei sind die Gewindeflanken 11a, 11b derart ausgestaltet, dass ein erster Flankenwinkel α₁ zu Beginn des ersten Gewindeganges 11, welcher zum zweiten Ende 7 des Schafts 5 angeordnet ist, kleiner ist als ein weiterer Flankenwinkel α₂ zu Beginn eines zweiten Gewindeganges 12, welcher näher zum ersten Ende 6 des Schaftes 5 angeordnet ist.

Ausgehend von dem ersten Gewindegang 11, beispielsweise 60°, nimmt der Flankenwinkel mit einem Flankenwinkel von α₂,..,α₇ der jeweiligen nächsten Gewindegänge 12,..,16 bis hin zu einen letzten am ersten Ende 6 angeordneten letzten Gewindegang 17 kontinuierlich zu.

Das Gewindeprofil 4 weist einen ersten Gewindegang 11, einen zweiten Gewindegang 12, einen dritten Gewindegang 13, einen vierten Gewindegang 14, einen fünften Gewindegang 15, einen sechsten Gewindegang 16 und einen siebten Gewindegang 17 auf. Zu jeden Gewindegang 11,..,17 gehört eine untere Gewindeflanke 11a,..,17a und eine obere Gewindeflanke 11b,..,17b. Die zugehörigen Flankenwinkel α₂,..,α₇ ausgehend vom ersten Flankenwinkel α₁ bis hin zum siebten Flankenwinkel α₇ nehmen kontinuierlich von 60° auf 70° zu.

## Patentansprüche

1. Einsatzelement (1) zum Erzeugen eines Gewindelochs (2) in einem Werkstück (3), welches nach dem Spritz- oder Druckgussverfahren hergestellt wird, aufweisend einen ein Gewindeprofil (4) tragenden Schaft (5) mit einem ersten Ende (6) und einem zweitem Ende (7), wobei das Gewindeprofil (4) vom ersten Ende (6) zum zweiten Ende (7) hin als konische Spirale ausgebildet ist, wodurch sich eine Entformungsschräge (8) ausbildet.

2. Einsatzelement (1) nach Anspruch 1, wobei das Gewindeprofil (4) mehrere Gewindegänge (11,..,17) aufweist und jeweils ein Gewindegang (11,..,17) von Gewindeflanken (11a, 11b,..,17a, 17b) umgeben ist, dabei sind die Gewindeflanken (11a, 11b) derart ausgebildet, dass ein erster Flankenwinkel (α₁) des ersten Gewindeganges (11), welcher zum zweiten Ende (7) des Schafts (5) angeordnet ist, kleiner ist als ein weiterer Flankenwinkel (α₇) eines weiteren Gewindeganges (17), welche näher zum ersten Ende (6) des Schafts (5) angeordnet ist.

3. Einsatzelement (1) nach Anspruch 2, wobei ausgehend von dem ersten Gewindegang (11) der Flankenwinkel (α₂ ,.., α₇) der jeweiligen nächsten Gewindegänge (12,..,17) bis hin zu einem letzten am ersten Ende (6) angeordneten Gewindegang (17) kontinuierlich zunimmt.

4. Einsatzelement (1) nach Anspruch 2, wobei der Flankenwinkel (α₁) zu Beginn des ersten Gewindeganges (11) 60° beträgt.

5. Verfahren zur Herstellung eines Werkstückes (3) nach dem Spritz- oder Druckgussverfahren, wobei zum Erzeugen eines Gewindelochs (1) in dem Werkstück (3) ein mit einem Gewindeprofil (4) versehenes Einsatzelement (1) in einem Formenwerkzeug positioniert wird,
**dadurch gekennzeichnet, dass** als Einsatzelement (1) ein Einsatzelement (1) verwendet wird, welches einen ein Gewindeprofil (4) tragenden Schaft (5) mit einem ersten Ende (6) und einem zweitem Ende (7) aufweist, wobei das Gewindeprofil (4) vom ersten Ende (6) zum zweiten Ende (7) hin als konische Spirale ausgebildet ist, wodurch eine Entformungsschräge (8) im Werkstück (3) ausgebildet wird.

6. Verfahren nach Anspruch 5, wobei das Gewindeprofil (4) mehrere Gewindegänge (11,..,17) aufweist und jeweils ein Gewindegang (11,..,17) von Gewindeflanken (11a, 11b) umgeben ist, dabei sind die Gewindeflanken (11a, 11b) derart ausgebildet, dass ein erster Flankenwinkel (α₁) eines ersten Gewindeganges (11), welcher zum zweiten Ende (7) des Schafts (5) angeordnet ist, kleiner ist als ein weiterer Flankenwinkel (α₇) eines weiteren Gewindeganges (17), welcher näher zum ersten Ende (6) des Schafts (5) angeordnet ist, wobei ein Werkstoff in das Formenwerkzeug gebracht wird und nach einem Erstarren des Werkstoffes in dem Formenwerkzeug, wird auf das Einsatzelement (1) ein Losdrehmoment (M_{L}) ausgeübt, wobei nach dem ersten Losdrehen das Einsatzelement (1) keinen Kontakt mehr zu dem erstarrten Werkstoff hat, wodurch ein Ausschraubmoment (M_{A}) zum kompletten Entspindeln des Einsatzelementes (1) minimiert wird.

7. Verfahren nach Anspruch 5 oder 6, zur Herstellung einer Gehäuseschale für ein industrielles Automatisierungsgerät, wobei in dem Formenwerkzeug der Gehäuseschale eine Vielzahl von Einsatzelementen (1) für eine Vielzahl von Gewindelöchern (2) für die spätere Montage von Gewindesteckverbindern positioniert wird.
